# EUROPEAN PATENT APPLICATION

(11) **EP 1 387 244 A2**
(43) Date of publication of application: **04.02.2004**
(21) Application number: 03254041.1
(22) Date of filing: 25.06.2003
(51) Int. Cl.: G06F 3/06

(54) **Time stamp management system for disk arrays**

(30) Priority: 30.07.2002 US 209075
(71) Applicant: Hewlett-Packard Company, Palo Alto, CA 94304 (US)
(72) Inventor: Rust, Robert A., Boise, Idaho 83704 (US)
(74) Representative: Jehan, Robert

(57) **Abstract**

At intervals, a time stamp management system evaluates a random subset of a time stamp data structure (120) wherein each time stamp element (202-212) is associated with a data block in a disk array (112) or other storage device. Each time stamp element (202) within the time stamp data structure (120) contains one of a limited number of discrete time stamp values. Using an algorithm (300, 400), a determination is made if the time stamp value should be changed. As each time stamp element (202-212) is maintained, a pointer matrix (126) having a pointer array (214-218) associated with each possible time stamp value is maintained. During data migration, data blocks having a desired time stamp value are easily located by reference to appropriate pointer arrays (214-218) within the pointer matrix (126).

## Description

The present invention relates to a processor-readable medium and to managing time stamps within a compound media, such as a disk array, by use of a pointer matrix which indicates the location of time stamps of a desired value.

RAID (redundant array of inexpensive disks) disk arrays are an example of a type of storage technology developed in response to an ever-increasing need for large-scale data storage. RAID disk arrays are designed to provide access to large amounts different types of data. Such disk arrays typically include different types of disks having different performance capabilities. For example, some disks may offer faster performance; other disks may offer less expensive storage. As a result, the overall performance of a system may be enhanced by migrating data less recently accessed to less expensive disks, while maintaining data more recently accessed on faster performing disks.

Time stamping systems may be used to associate a time or age to a data block. A time stamp is associated with each block of data when the data is originally written or modified. This association aids in the management of the data block. To manage the data, the computer system reads the time stamp for a particular block of data to determine the age of the block of data. Once the age of the data is known, the computer system can decide whether to keep the data, erase the data, store the data in a different format (such as compressed), or store the data in a different location.

Conventional time stamp systems are absolute, in that they record an exact date and time. As each block of data is written, a time stamp is associated with the block of data and stamped with the time the data is written or updated. To determine the age of a block of data, a computer system must read the block's associated time stamp and subtract the value of the time stamp from the current value of the time clock.

Additionally, conventional time stamp systems are linear. Linear time stamp systems increment the age of data blocks by examining their time stamps with each update cycle. In order to provide a time stamp system with a sufficiently wide range of time stamps, a relatively large block of memory is needed for each time stamp. A typical allocation of memory is 20 bits for each time stamp. Due to the number of data blocks present in large memory systems, the amount of memory devoted to time stamps may be considerable.

During maintenance procedures, aging data blocks may be moved from faster performing disks to more economical disks. However, a large number of data blocks may all have different time stamps, and a large number of disks with different response times and cost ratios may be available. Accordingly, a large amount of data must be processed to determine which data blocks should be moved, and to where.

The present invention seeks to provide an improved processor-readable medium, method of migrating data within a disc array and time stamp management system.

According to an aspect of the present invention, there is provided a processor-readable medium as specified in claim 1.

According to another aspect of the present invention, there is provided a disc array as specified in claim 4.

According to another aspect of the present invention, there is provided a method of migrating data within a disc array as specified in claim 9.

The invention also extends to a time stamp management system.

In a preferred embodiment, at intervals, a time stamp management system evaluates a random subset of a time stamp data structure wherein each time stamp element is associated with a data block in a disk array or other storage device. Each time stamp element within the time stamp data structure contains one of a limited number of discrete time stamp values. Using an algorithm, a determination is made if the time stamp value should be changed. As each time stamp element is maintained, a pointer matrix having a pointer array associated with each possible time stamp value is maintained.

Embodiments of the present invention are described below, by way of example only, with reference to the accompanying drawings in which:
Fig. 1 is a block diagram illustrating a disk array networked to a host computer. A controller portion of the disk array includes a time stamp and data migration modules.
Fig. 2 is a block diagram that illustrates the relationship between the time stamp module and the data migration module.
Fig. 3 is a flow diagram that describes a method by which a time stamp data structure and a pointer matrix are maintained.
Fig. 4 is a flow diagram that describes a method by which data is migrated within a disk array using the pointer matrix.

In the described embodiments, at intervals, a time stamp management system evaluates a random subset of a time stamp data structure wherein each time stamp element is associated with a data block in a disk array or other storage device. Each time stamp element within the time stamp data structure contains one of a limited number of discrete time stamp values. Using an algorithm, a determination is made if the time stamp value should be changed. As each time stamp element is maintained, a pointer matrix having a pointer array associated with each possible time stamp value is maintained. During data migration, data blocks having a desired time stamp value are easily located by reference to appropriate pointer arrays within the pointer matrix.

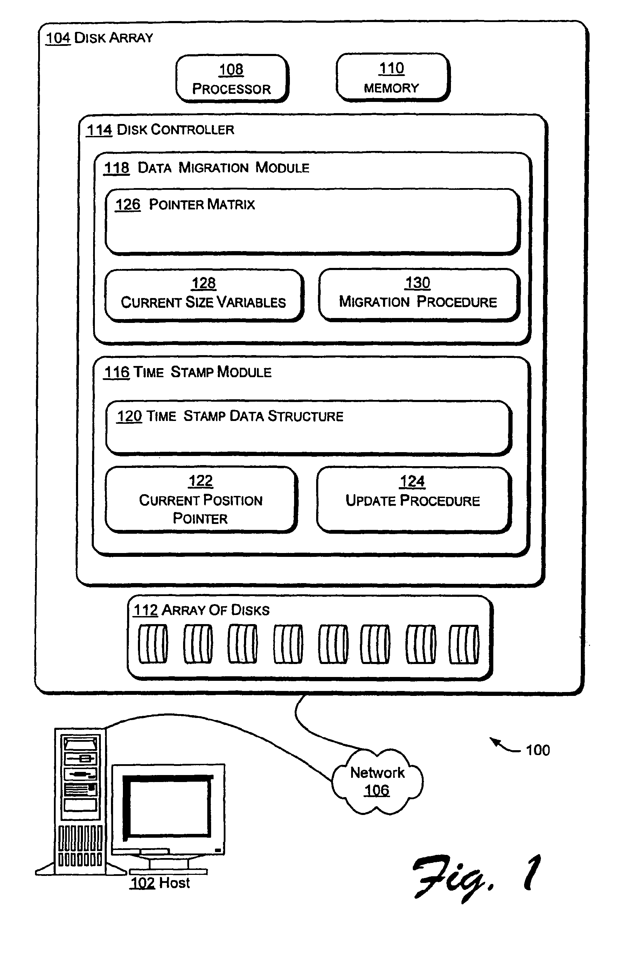

Fig. 1 shows a system environment 100 that is suitable for implementing a time stamp management system for disk arrays. The system environment includes a host 102 or workstation operatively connected to a disk array 104 by a network connection 106, which can be a direct connection such as a parallel bi-directional universal serial bus (USB), a fiber optic cable link or "fiber channel", a serial interface bus, or another other suitable interface known in the art. The network connection 106 may also be made by a network technology such as a LAN (local area network), a WAN (wide area network), an intranet, the Internet or other suitable communication link.

Within the disk array 104, a processor 108 executes commands contained within a memory element 110, which can include RAM, ROM, disk or other storage media. An array of disks 112 is controlled by the disk controller 114. In many applications, the array of disks provides the very large capacity which is required to handle large numbers of large files, particularly those containing graphic media and multimedia content. In some applications, the array of disks contains redundant information, which protects the content owner from some of the risks associated with loss.

The disk controller 114 includes a time stamp module 116 and a data migration module 118. The time stamp module includes a time stamp data structure 120, which includes a time stamp element associated with each block of data within the array of disks. At intervals, a current position pointer 122 may be directed at a stamp element within the time stamp data structure, and an update procedure 124 is consulted to determine if the value contained within the time stamp element should be incremented.

The data migration module 118 includes a pointer matrix 126, which includes values associated with the offset by which time stamp elements associated with any given time stamp value may be found within the time stamp matrix. For example, where time stamp elements having the time stamp value of five are desired, the pointer matrix may be used to find the offsets within the time stamp data structure of a number of time stamp elements with the time stamp value of five. While use of offsets is a more efficient method to record locations within the time stamp data structure, absolute locations could also be recorded. Current size variables 128 are associated with each time stamp value, and reveal the number of pointers (i.e. offsets) available for any given time stamp value. For example, if six offsets are known associated with a time stamp value of three (i.e. six time stamp elements having the time stamp value of three are known), then the current size variable associated with the time stamp value of three would have a value of six.

The data migration module also includes a migration procedure 130, which is configured to move data blocks associated with the same time stamp value from a first location to a second location.

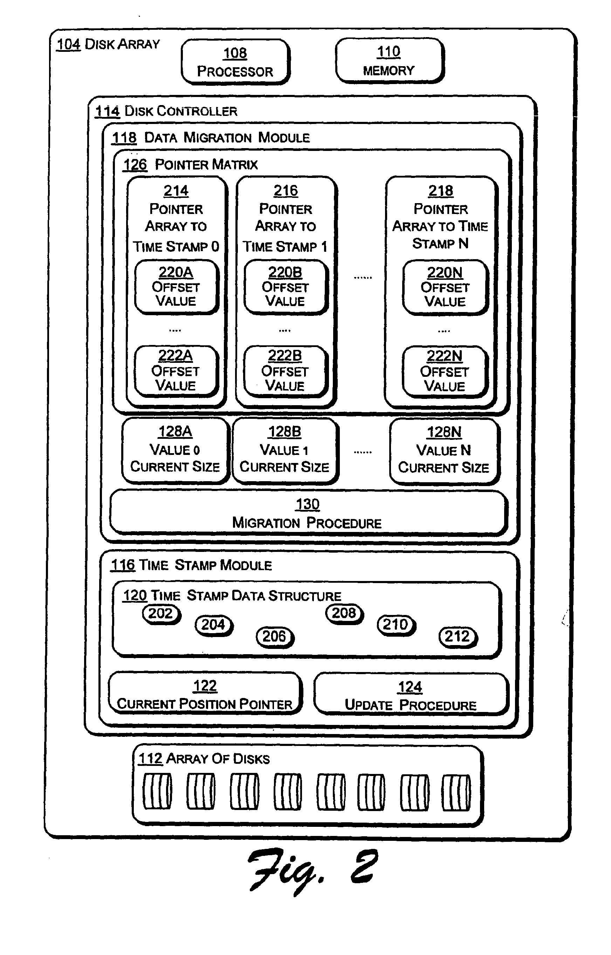

Fig. 2 shows additional detail of the structure of the disk array 104. The time stamp module 116 includes the time stamp data structure 120, a current position pointer 122 and an update procedure 124. The time stamp data structure includes a plurality of time stamp elements, including exemplary time stamp elements 202 through 212. In the embodiment of Fig. 2, a relationship (or mapping) exists between the location of the data within the disk array and the position of the stamp within the time stamp structure. For example, the first time stamp in the time stamp data structure represents an age of a first segment of data (e.g. 256KB) on a disk. The second stamp is for the second segment, and so on. Each time stamp element points to a data block within the array of disks 112, and contains a time stamp value. In one implementation, where each time stamp element contains four bits, time stamp values have a range including integers from zero to fifteen.

A current position pointer 122 is configured to point to each time stamp element within the time stamp data structure in a desired sequence. An update procedure 124 is configured to determine if the value contained within the time stamp element, at which the pointer 122 is directed, should be incremented. The time stamp element may be modified according to any desired strategy, such as that disclosed by U.S. patent 5,978,928, issued November 2, 1999, and assigned to the Hewlett-Packard Company.

The pointer matrix 126 allows time stamp elements of any desired time stamp value to be quickly found. This facilitates data block migration, in that a number of data blocks having desired time stamp values may be quickly located for migration to free disk space. For example, where slower and less expensive disk space has been freed up by removal of unwanted files, data blocks of a specific age or range of ages may be moved to the recently freed disk space, thereby freeing up more desirable disk space.

In the implementation of Fig. 2, each column of the pointer matrix 136 includes a pointer array 214, 216, 218 associated with a given time stamp value. That is, each pointer array includes a plurality of offset values pointing to time stamp elements having a particular value. Each offset value within each pointer array within the pointer matrix contains the distance from the beginning of the time stamp data structure associated with a given time stamp element. In some applications, each pointer array may alternatively store an actual address within the time stamp data structure associated with the time stamp value, rather than an offset. In a still further alternative, each pointer array may store the address or offset of the actual data block within the disk array having the time stamp value associated with the pointer array.

As in the preferred embodiment each time stamp value is associated with a pointer array, a number of time stamp elements having a given time stamp value may be quickly located by reference to the array. In one implementation of the pointer array, where the time stamp elements within the time stamp data structure 120 are four-bit values, 16 time stamp values are possible. Accordingly, 16 columns would be present along one axis within the pointer matrix. Each column is formed by a pointer array 214, 216, 218 that includes a plurality of time stamp pointers.

The time stamp pointers are most compactly represented by offset values 220A...222A, which are values associated with the offset into the time stamp structure for a particular time stamp value. For example, the offset values in the pointer array 214 are associated with a time stamp value of zero. Accordingly, the elements in the column, represented by the first and last offset values 220A and 222A, each includes a value. Each of these values is the offset, i.e. a distance into the time stamp data structure from its first element, which points at a time stamp element. Thus, each offset value 220A through 222A points to a time stamp value having the value of zero.

Similarly, the arrays of pointers 216 and 218 each have offset values illustrated by first and last values 220B, 222B and 220N, 222N, respectively, which point to time stamp elements within the time stamp data structure having the time stamp values 1 and N, respectively.

The current size variables 128A through 128N contain the number of valid pointers contained within each pointer array 214, 216, 218. Additionally, where the current size variables are less than a maximum value, they indicate the location into which the next acquired offset value should be placed within the pointer array 214, 216, 218.

A migration procedure 130 is configured to move data blocks associated with the same time stamp value from a first location to a second location. The migration procedure accesses the offset values, within the pointer array 214, 216 or 218, associated with the desired time stamp value. These offset values point to time stamp elements within the time stamp data structure 120, which in turn point to data blocks to be moved within the array of disks 112 having an age associated with the desired time stamp.

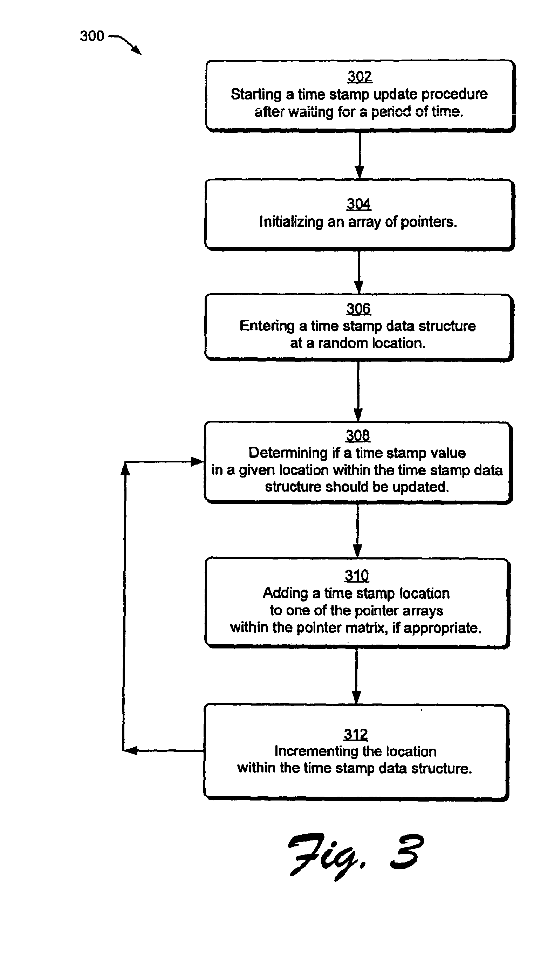

The flow chart of Fig. 3 illustrates a method 300 for time stamp management, including maintenance of a time stamp data structure and an associated pointer matrix. The elements of the method may be performed by any desired means, such as by the execution of processor-readable instructions defined on a processor-readable media, such as a disk, a ROM or other memory device.

At block 302, the conclusion of a waiting period or other event triggers the initiation of an update of a time stamp data structure and a pointer matrix. Updating the time stamp data structure includes evaluation of some or all of the time stamps, each of which is associated with a block of data that is typically located on an array of disks. Updating the pointer matrix includes modifying pointer arrays associated with each time stamp value to include locations of time stamps having the associated time stamp value.

At block 304, the pointer matrix, which includes a pointer array associated with each time stamp value, is initialized. The initialization process may include resetting the entire matrix. Alternatively, the offset values within each pointer array may be checked, to see if they still point at a time stamp having the correct value.

At block 306, the examination of the time stamp data structure is commenced from a random location. Where only a subset of the time stamp data structure is to be examined during a period or cycle, starting at a random location equalizes over time the likelihood of examination of any given time stamp element within the time stamp data structure. Where the entire time stamp data structure is to be evaluated, the examination may be started at the beginning of the data structure.

At block 308, a determination is made if a time stamp value within the time stamp data structure should be altered. This determination may be made by use of an algorithm such as that present in U.S. patent 5,978,928.

At block 310, the time stamp location may be added to one of the pointer arrays within the pointer matrix, thereby building a pointer array. For example, the time stamp location may be added to a pointer array if the pointer array is not already full of offsets to time stamp locations having the time stamp value of the time stamp location. To economize on the space required for storage of the time stamp locations, the elements within the point arrays may be stored as offset values from the start (or other location) of the time stamp data structure.

At block 312, the location within the time stamp data structure which is to be evaluated is incremented, until a desired number of elements within the time stamp data structure have been evaluated. Blocks 308, 310 and 312 may be repeated, as desired.

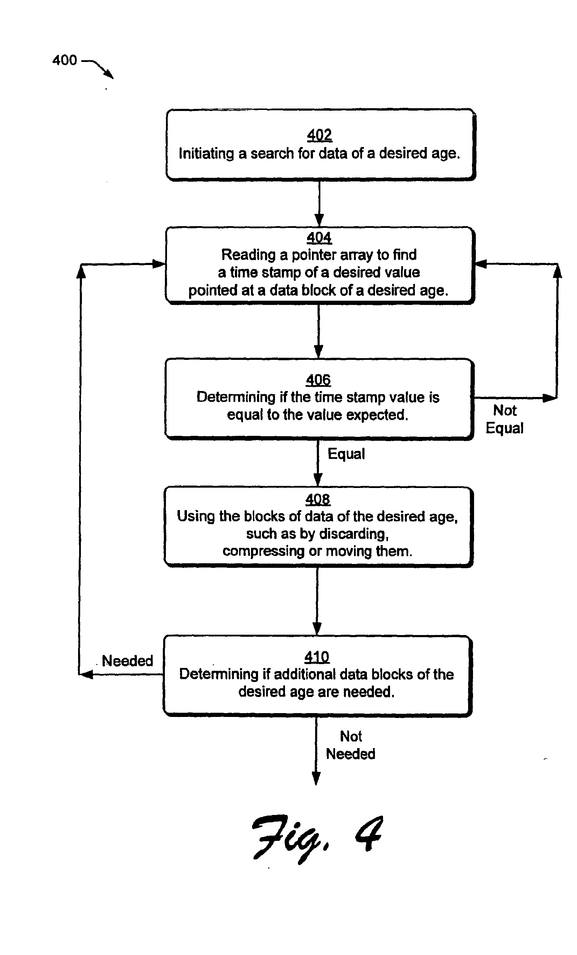

The flow chart of Fig. 4 illustrates a method 400 that extends the functionality of time stamp management to include searching for data associated with a particular time stamp value or within a given range of time stamp values. The data located in this manner may be processed in any desired manner, such relocation to different storage areas, compression, or removal from the disk array. The elements of the method may be performed by any desired means, such as by the execution of processor-readable instructions defined on a processor-readable media, such as a disk, a ROM or other memory device.

At block 402, a search for data having a certain time stamp value, or range of time stamp values, is initiated. The time stamp value selected, or range of time stamp values selected, determine the pointer arrays within the pointer matrix which are accessed.

At block 404, the pointer array or arrays within the pointer matrix associated with the time stamp value or values of interest are examined to find a time stamp of a desired value pointed at a data block of a desired age. Each value within the pointer array is an offset into the time stamp data structure. The position of each element within the time stamp data structure is associated with an offset to a data block within the disk array. Additionally, each time stamp element contains a value associated with the age of the data block.

At block 406, an offset value within the pointer array(s) selected is examined to determine if the time stamp element within the time stamp data structure is equal or not equal to the expected value. It could be the case that the value has changed, and this is not reflected in the pointer array within the pointer matrix from which the offset value was obtained. Where the time stamp value has changed, block 404 is repeated. Where the time stamp value has not changed, a block of data having a time stamp of the desired age has been located. The block may then be accessed.

At block 408, the blocks of data having the desired time stamp value are used in any manner desired, such as by moving them, compressing them or discarding them. In an exemplary use, the migration procedure locates free disk space, associates the value contained within the time stamp element with the free disk space, and migrates data blocks associated with the value contained within the time stamp element to the free disk space.

At block 410, it is determined if additional blocks of data are needed or not needed. If they are needed, then block 404 is repeated.

In conclusion, at intervals the preferred embodiments of time stamp management system evaluate a random subset of a time stamp data structure wherein each time stamp element is associated with a data block in a disk array or other storage device. Each time stamp element within the time stamp data structure contains one of a limited number of discrete time stamp values. Using an algorithm, a determination is made if the time stamp value should be changed. As each time stamp element is maintained, a pointer matrix having a pointer array associated with each possible time stamp value is maintained. During data migration, data blocks having a desired time stamp value are easily located by reference to appropriate pointer arrays within the pointer matrix.

Although the preferred embodiments have been described in language specific to structural features and/or methodological steps, it is to be understood that the appended claims are not limited to the specific features or steps described. Rather, the specific features and steps are exemplary forms of implementing this disclosure. For example, while the pointer matrix has been illustrated in a manner by which individual time stamp values are associated with each pointer array within the pointer matrix, alternatives are possible. For example, where a large number of time stamp values are present, each pointer array could contain pointers to time stamp elements having values within a range.

Additionally, while one or more methods have been disclosed by means of flow charts and text associated with the blocks, it is to be understood that the blocks do not necessarily have to be performed in the order in which they were presented, and that an alternative order may result in similar advantages.

The disclosures in United States patent application no. 10/209,075, from which this application claims priority, and in the abstract accompanying this application are incorporated herein by reference.

## Claims

1. A processor-readable medium including processor-executable instructions operable:
to select a time stamp element (202) within a time stamp data structure (120);
to determine if a value, contained within the time stamp element (202) and associated with a data block, should be updated; and
to build a pointer array (214), for each time stamp value, pointing at time stamp elements (202-212) containing that value, wherein time stamp elements (202-212) are associated with data blocks.

2. A medium as recited in claim 1, wherein the instructions operable to select a time stamp element within a time stamp data structure include instructions operable:
initially, to direct a current position pointer (122) in a random manner at a time stamp element (202-212) within the time stamp data structure; and
subsequently, to increment\ the current position pointer (122) at time stamp elements (202-212) in a sequence.

3. A medium as recited in claim 1, wherein the instructions operable to select a time stamp element within a time stamp data structure comprises instructions operable:
to direct a current position pointer (122) at a first time stamp element (202) within the time stamp data structure (120); and
to increment the current position pointer (122) to a further time stamp element (204).

4. A disk array, including:
a time stamp data structure (120) including time stamp elements (202-212);
a data migration module (118) including a pointer matrix (126) operable to associate a value contained within a plurality of time stamp elements (202―212) with an offset value by which each of the plurality of time stamp elements (202-212) can be located within the time stamp data structure (120); and
an array of disks (112) including data blocks, wherein each data block is associated with a time stamp element (202―212) within the time stamp data structure (120).

5. An array as recited in claim 4, including:
free disk space within the array of disks (112); and
a migration procedure (118) operable to associate the free disk space with a time stamp value, to locate data blocks to be moved by reference to the pointer matrix (126), and to move the data blocks into the free disk space.

6. An array as recited in claim 5, including:
a time stamp module (116) operable to update time stamp elements (202-212) within the time stamp data structure (120) by initially pointing a current position pointer (122) in a random manner at a time stamp element (202―212) within the time stamp data structure (120) and, upon completion of an updating procedure, to increment the current position pointer (122) in a sequence.

7. An array as recited in claim 4, including:
a time stamp module (116) operable to update time stamp elements (202-12) within the time stamp data structure (120) by initially pointing a current position pointer (122) to a first time stamp element within the time stamp data structure (120) and, upon completion of an updating procedure, to increment the current position pointer (122) in a sequence.

8. An array as recited in any one of claims 4 to 7, wherein the pointer matrix (126) includes, for each time stamp value, a pointer array (214―218) operable to time stamp elements (202―212) containing that time stamp value.

9. A method of migrating data within an disk array, including the steps of:
selecting a time stamp element (202―212) within a time stamp data structure (120);
determining if a value, contained within the time stamp element (207-212) and associated with a data block, should be updated; and
building a pointer array (214 ― 218), for each time stamp value, pointing at time stamp elements (202―212) containing that value, wherein each time stamp element (202―212) is associated with a data block.

10. A method as in claim 9, wherein the step of selecting a time stamp element within a time stamp data structure includes the steps of:
initially, directing a current position pointer (122) in a random manner at a time stamp element (202―212) within the time stamp data structure (120);
and
subsequently, incrementing the current position pointer (122) at time stamp elements (202―212) in a sequence.
